# EUROPÄISCHE PATENTANMELDUNG

(11) **EP 2 832 955 A1**
(43) Veröffentlichungstag der Anmeldung: **04.02.2015**
(21) Anmeldenummer: 13178384.7
(22) Anmeldetag: 29.07.2013
(51) Int. Cl.: F01D 5/18

(54) **Turbinenschaufel mit bogenförmigen zylindrischen Kühlkörpern**

(71) Anmelder: Siemens Aktiengesellschaft, 80333 München (DE)
(72) Erfinder: Ahmad, Fathi, 41564 Kaarst (DE)

(57) **Zusammenfassung**

Eine Turbinenschaufel (120, 130) mit einer Druckseite (148), einer Saugseite (150) und einem dazwischen angeordneten Kühlluftkanal (152), wobei in dem Kühlluftkanal ein Kühlkörper (158) mit kreisförmiger Grundfläche (158) angeordnet ist, der sich von der Druckseite (148) zur Saugseite (150) erstreckt. Der Kühlkörper (158) ist derart kurvenförmig ausgestaltet, dass er eine gegenüber einem geraden Kreiszylinder vergrößerte Mantelfläche aufweist.

## Beschreibung

Die Erfindung betrifft eine Turbinenschaufel mit einer Druckseite, einer Saugseite und einem dazwischen angeordneten Kühlluftkanal, wobei in dem Kühlluftkanal ein Kühlkörper mit kreisförmiger Grundfläche angeordnet ist, der sich von der Druckseite zur Saugseite erstreckt.

Eine Turbine ist eine Strömungsmaschine, welche die innere Energie (Enthalpie) eines strömenden Fluids (Flüssigkeit oder Gas) in Rotationsenergie und letztlich in mechanische Antriebsenergie umwandelt. Dem Fluidstrom wird durch die möglichst wirbelfreie laminare Umströmung der Turbinenschaufeln ein Teil seiner inneren Energie entzogen, der auf die Laufschaufeln der Turbine übergeht. Über diese wird dann die Turbinenwelle in Drehung versetzt, die nutzbare Leistung wird an eine angekuppelte Arbeitsmaschine, wie beispielsweise an einen Generator, abgegeben. Laufschaufeln und Welle sind Teile des beweglichen Rotors oder Läufers der Turbine, der innerhalb eines Gehäuses angeordnet ist.

In der Regel sind mehrere Schaufeln auf der Achse montiert. In einer Ebene montierte Laufschaufeln bilden jeweils ein Schaufelrad oder Laufrad. Die Schaufeln sind leicht gekrümmt profiliert, ähnlich einer Flugzeugtragfläche. Vor jedem Laufrad befindet sich üblicherweise ein Leitrad. Diese Leitschaufeln ragen vom Gehäuse in das strömende Medium hinein und versetzen es in einen Drall. Der im Leitrad erzeugte Drall (kinetische Energie) wird im darauffolgenden Laufrad genutzt, um die Welle, auf der die Laufradschaufeln montiert sind, in Rotation zu versetzen. Leitrad und Laufrad zusammen bezeichnet man als Stufe. Oft sind mehrere solcher Stufen hintereinandergeschaltet.

Die Turbinenschaufeln einer Turbine sind besonderen Belastungen ausgesetzt. Die hohen Belastungen machen höchstbelastbare Werkstoffe erforderlich. Turbinenschaufeln werden daher aus Titan-Legierungen, Nickel-Superlegierung oder Wolfram-Molybdän-Legierungen gefertigt. Die Schaufeln werden für höhere Resistenz gegen Temperaturen so wie Erosion wie zum Beispiel Lochfraß, auch bekannt unter "pitting corrosion", durch Beschichtungen geschützt. Die Beschichtung zur Hitzeabschirmung wird Thermal Barrier Coating bzw. kurz TBC genannt. Weitere Maßnahmen, um die Schaufeln hitzeresistenter zu machen, bestehen in ausgeklügelten Kühlkanalsystemen. Diese Technik wird sowohl in den Leit- als auch in den Laufschaufeln angewendet.

Vielfach werden in die Turbinenschaufeln Kühlkanäle eingegossen, die sich zwischen der Druck- und der Saugseite des Turbinenschaufelprofils entlang der Hauptrichtung der Turbine erstrecken. Zur Verbesserung der Kühlwirkung der durchströmenden Luft werden hier bedarfsweise Kühlkörper, so genannte "pin fins" angeordnet, die typischerweise eine kreisförmige Grundfläche und die Form eines geraden Zylinders aufweisen. Diese Kühlkörper werden beim Gießprozess der Turbinenschaufel eingebracht.

Die thermische Belastung der Turbinenschaufeln begrenzt zurzeit den Wirkungsgrad der Turbine, da die Werkstoffe nur eine begrenzte Betriebstemperatur erlauben. Hohe Betriebstemperaturen wirken sich aber positiv auf den Carnot-Wirkungsgrad aus.

Es ist daher Aufgabe der Erfindung, eine Turbinenschaufel der eingangs genannten Art anzugeben, die eine verbesserte Kühlluftwirkung und somit höhere Betriebstemperaturen und einen höheren Wirkungsgrad der Turbine erlaubt.

Diese Aufgabe wird erfindungsgemäß gelöst, indem der Kühlkörper derart ausgestaltet ist, dass er eine gegenüber einem geraden Kreiszylinder vergrößerte Mantelfläche aufweist.

Die Erfindung geht dabei von der Überlegung aus, dass die Kühlwirkung durch die Formgebung der pin fins verbessert werden könnte. Dem stand bislang die etablierte Überzeugung entgegen, dass nur gerade Zylinderformen im Gießprozess herzustellen sind. In Abkehr von dieser Überzeugung wurde nun aber erkannt, dass auch andere Formen möglich sind. Um die Kühlwirkung zu verbessern, sollte die Oberfläche der pin fins vergrößert werden. Dies ist erreichbar, indem der jeweilige Kühlkörper eine gegenüber einem geraden Kreiszylinder vergrößerte Mantelfläche aufweist.

In vorteilhafter Ausgestaltung weist der Kühlkörper eine Form auf, die durch Verschiebung der Grundfläche entlang einer Kurve gebildet wird. Der Kühlkörper hat somit die Form eines massiven, gewundenen Schlauches. Dadurch wird die Mantelfläche erhöht, ohne dass die Strömung der Kühlluft übermäßig beeinflusst wird. Weiterhin ist eine derartige Form im Guss herstellbar.

Vorteilhafterweise beschreibt ein Abschnitt der Kurve dabei einen Kreisbogen. Hierdurch wird in besonders einfacher Weise eine Vergrößerung der Oberfläche erreicht.

In weiterer vorteilhafter Ausgestaltung schneidet die Kurve auf der Druckseite und der Saugseite eine Senkrechte zu Druckseite und Saugseite. Mit anderen Worten: Anfangs- und Endpunkt des Kühlkörpers auf Druck- bzw. Saugseite liegen genau gegenüber und damit an der gleichen Stelle, wie dies bei einem einfachen, senkrecht angeordneten Kühlkörper in gerade Zylinderform der Fall wäre.

Vorteilhafterweise ist eine Mehrzahl von Kühlkörpern gitterartig in dem Kühlluftkanal angeordnet. Es kann z. B. ein regelmäßiges Gitter solcher Kühlkörper gebildet werden, durch das die Kühlluft strömt. Durch die Gitteranordnung wird ein Durchfluss der Kühlluft möglichst wenig behindert, während gleichzeitig eine Vielzahl von Kühlkörpern Wärme an die Kühlluft abgeben kann.

Weiterhin grenzt der Kühlluftkanal vorteilhafterweise an eine Profilhinterkante der Turbinenschaufel. An der Hinterkante des tragflächenartigen Profils der Turbinenschaufel ist nämlich der Abstand zwischen Druck- und Saugseite der Turbinenschaufel am geringsten, da diese dort in spitzem Winkel zusammenlaufen. Daher kann hier im Vergleich zu zentraleren Bereichen der Turbinenschaufel weniger Kühlluft strömen, so dass es gerade hier von Vorteil ist, die für den Wärmeaustausch zur Verfügung stehende Oberfläche durch wie beschrieben ausgestaltete Kühlkörper zu erhöhen.

Ein Stator oder Rotor für eine Turbine umfasst vorteilhafterweise eine derartige Turbinenschaufel als Leit- bzw. Laufschaufel.

Eine Turbine umfasst vorteilhafterweise einen derartigen Stator und/oder Rotor.

Vorteilhafterweise ist die Turbine dabei als Gasturbine ausgelegt. Gerade in Gasturbinen sind die thermischen und mechanischen Belastungen besonders hoch, so dass die beschriebene Ausgestaltung der Turbinenschaufel besondere Vorteile hinsichtlich der Kühlung und damit auch des Wirkungsgrads bietet.

Eine Kraftwerksanlage umfasst vorteilhafterweise eine derartige Turbine.

Die mit der Erfindung erzielten Vorteile bestehen insbesondere darin, dass durch die Vergrößerung der Oberfläche von Stabkühlkörpern im Kühlkanal einer Turbinenschaufel eine Verbesserung der Kühlung insbesondere an der Profilhinterkante einer Turbinenschaufel erreicht wird. Die Effizienz des Wärmeübertrags wird erhöht, so dass höhere Temperaturen auf der Außenseite der Turbinenschaufel möglich sind. Dies erhöht den Wirkungsgrad der Turbine.

Ausführungsbeispiele der Erfindung werden anhand einer Zeichnung näher erläutert. Darin zeigen:
- FIG 1: einen teilweisen Längsschnitt durch eine Gasturbine,
- FIG 2: das Profil einer Laufschaufel,
- FIG 3: einen Längsschnitt durch die Laufschaufel, und
- FIG 4: einen pin fin mit erhöhter Oberfläche.

Gleiche Teile sind in allen Figuren mit denselben Bezugszeichen versehen.

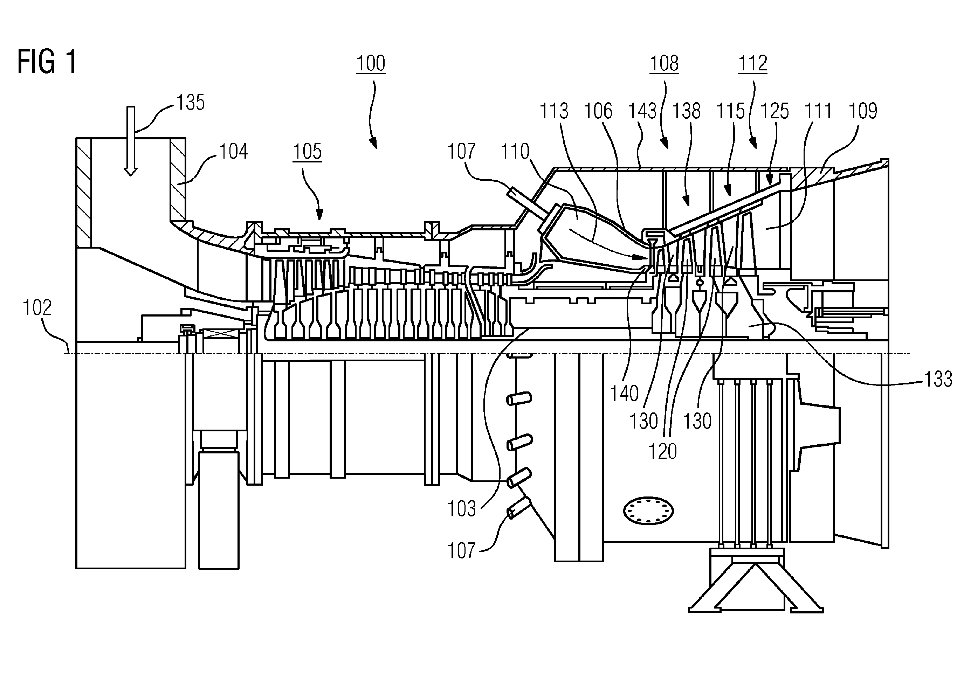

Die FIG 1 zeigt eine Turbine 100, hier eine Gasturbine, in einem Längsteilschnitt. Die Gasturbine 100 weist im Inneren einen um eine Rotationsachse 102 (Axialrichtung) drehgelagerten Rotor 103 auf, der auch als Turbinenläufer bezeichnet wird. Entlang des Rotors 103 folgen aufeinander ein Ansauggehäuse 104, ein Verdichter 105, eine torusartige Brennkammer 110, insbesondere Ringbrennkammer 106, mit mehreren koaxial angeordneten Brennern 107, eine Turbine 108 und das Abgasgehäuse 109.

Die Ringbrennkammer 106 kommuniziert mit einem ringförmigen Heißgaskanal 111. Dort bilden beispielsweise vier hintereinander geschaltete Turbinenstufen 112 die Turbine 108. Jede Turbinenstufe 112 ist aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei am Stator 143 befestigt, wohingegen die Laufschaufeln 120 einer Reihe 125 mittels einer Turbinenscheibe 133 am Rotor 103 angebracht sind. Die Laufschaufeln 120 bilden somit Bestandteile des Rotors oder Läufers 103. An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet. Um den dort herrschenden Temperaturen standzuhalten, werden diese mittels eines Kühlmittels gekühlt. Ebenso können die Schaufeln 120, 130 Beschichtungen gegen Korrosion (MCrAlX; M = Fe, Co, Ni, Seltene Erden) und Wärme (Wärmedämmschicht, beispielsweise Zr02, Y204-Zr02) aufweisen.

Jede Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Dichtring 140 des Stators 143 festgelegt. Jeder Dichtring 140 umschließt dabei die Welle des Rotors 103.

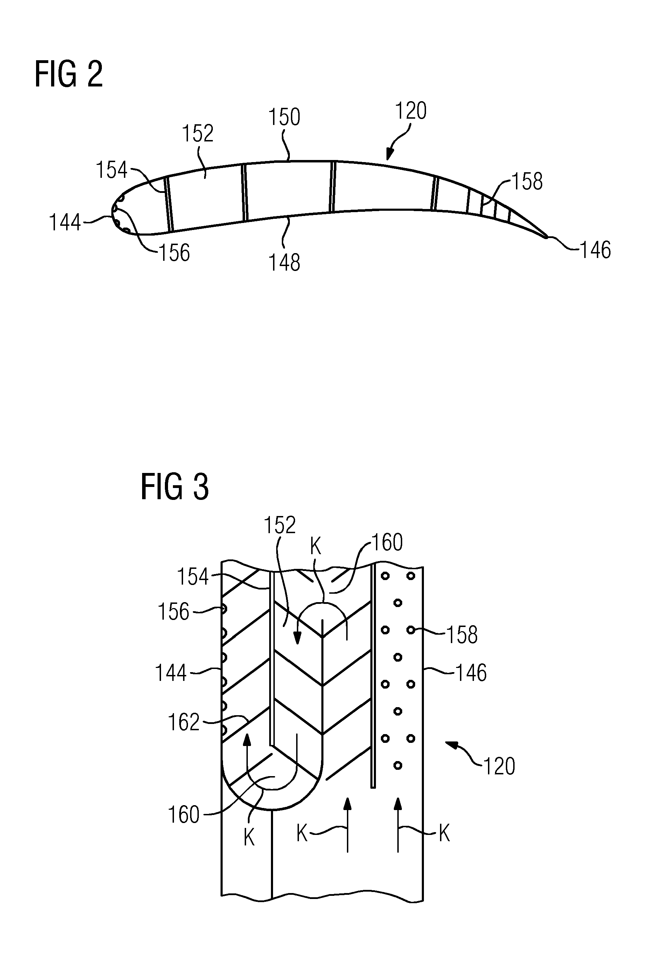

In FIG 2 ist beispielhaft das Profil einer Laufschaufel 120 gezeigt. Das Profil ähnelt dem einer Flugzeugtragfläche. Es weist eine abgerundete Profilnase 144 und einer Profilhinterkante 146 auf. Zwischen Profilnase 144 und Profilhinterkante 146 erstrecken sich die Druckseite 148 und die Saugseite 150 der Laufschaufel. Zwischen Druckseite 148 und Saugseite 150 sind Kühlluftkanäle 152 eingebracht, die sich entlang der in die FIG 2 hineinführenden Haupterstreckungsrichtung der Laufschaufel 120 erstrecken und durch Wandungen 154 voneinander abgegrenzt sind.

Im Bereich der Profilnase 144 sind dabei Kühlluftaustrittsöffnungen 156 vorgesehen, durch die Kühlluft austreten kann und so einen schützenden Kühlfilm auf der Außenseite der Laufschaufel 120 bildet. In dem an die Profilhinterkante 146 angrenzenden Kühlluftkanal 152 sind zusätzlich Kühlkörper 158, so genannte "pin fins" angeordnet, die durch ihre im Querschnitt der Kühlluft stehende Oberfläche den Wärmeübertrag von der Kühlluft in die Laufschaufel 120 verbessern.

FIG 3 zeigt die Laufschaufel 120 im Längsschnitt. Erkennbar ist hier, dass die drei an die Profilnase 144 anschließenden, parallelen Kühlkanäle 152 über Öffnungen 160 derart verbunden sind, dass sie einen mäanderförmigen gemeinsamen Kanal bilden. Kühlluft K tritt am unteren Ende der FIG 3 ein und wird an jeder Öffnung 160 in die entgegengesetzte Richtung umgelenkt und strömt so entlang des Kanals weiter, bis sie schließlich an den Kühlluftaustrittsöffnungen 156 austritt.

In den genannten drei Kühlluftkanälen 152 sind Kühlrippen 162 auf der flachen Außenseite der Laufschaufel 120 angeordnet, die als Turbolatoren wirken und so die Kühlwirkung verbessern. Der der Profilhinterkante 146 zugewandte Kühlluftkanal 152 ist hingegen separat geschaltet und weist wie beschrieben Kühlkörper 158 auf. In FIG 3 ist erkennbar, dass die Kühlkörper 158 ein regelmäßiges Gitter bilden.

Die beschriebene Kühlstruktur wurde am Beispiel einer Laufschaufel 120 erläutert. Ebensolche Kühlstrukturen können auch entsprechend in Leitschaufeln 130 vorgesehen sein. Die im Folgenden beschriebene Ausgestaltung der Kühlkörper 158 kann dort ebenso verwirklicht sein.

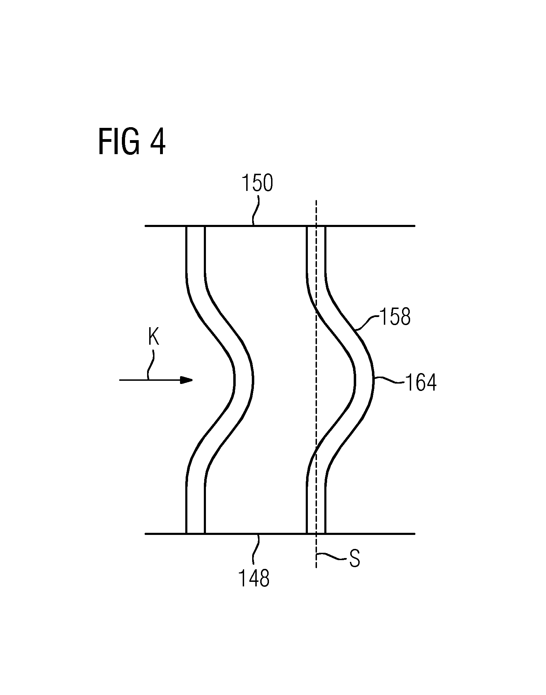

FIG 4 zeigt einen zum Schnitt der FIG 3 senkrechten Längsschnitt des der Profilhinterkante 146 zugewandten Kühlluftkanals 152. Die Form der Kühlkörper 158 weist eine gegenüber einem gewöhnlichen geraden Kreiszylinder erhöhte Mantelfläche auf. Dazu ist in einem in der Mitte des jeweiligen Kühlkörpers 158 liegenden Abschnitt 164 der Kühlkörper kreisbogenartig ausgebuchtet. Die Form des Kühlkörpers unterscheidet sich vom normalen Zylinder also dadurch, dass die noch immer kreisförmige Grundfläche nicht entlang einer Gerade, sondern entlang einer Kurve fortgesetzt wird.

Die Kurve weist gegenüber der Senkrechten S zwischen Druckseite 148 und Saugseite 150 eine Auslenkung auf, wobei sie aber an Druckseite 148 und Saugseite 150 die Senkrechte S schneidet.

Die Vergrößerung der Oberfläche des Kühlkörpers 158 verbessert die Kühlwirkung durch die bessere Wärmeübertragung und ermöglicht so höhere Temperaturen auf der Außenseite der Turbinenschaufel 130, 130.

## Patentansprüche

1. Turbinenschaufel (120, 130) mit einer Druckseite (148), einer Saugseite (150) und einem dazwischen angeordneten Kühlluftkanal (152),
wobei in dem Kühlluftkanal ein Kühlkörper (158) mit kreisförmiger Grundfläche (158) angeordnet ist, der sich von der Druckseite (148) zur Saugseite (150) erstreckt,
wobei der Kühlkörper (158) derart ausgestaltet ist, dass er eine gegenüber einem geraden Kreiszylinder vergrößerte Mantelfläche aufweist.

2. Turbinenschaufel (120, 130) nach Anspruch 1,
bei der der Kühlkörper (158) eine Form aufweist, die durch Verschiebung der Grundfläche entlang einer Kurve gebildet wird.

3. Turbinenschaufel (120, 130) nach Anspruch 2,
bei der ein Abschnitt (164) der Kurve einen Kreisbogen beschreibt.

4. Turbinenschaufel (120, 130) nach Anspruch 2 oder 3,
bei dem die Kurve auf der Druckseite (148) und der Saugseite (150) eine Senkrechte zu Druckseite (148) und Saugseite (150) schneidet.

5. Turbinenschaufel (120, 130) nach einem der vorhergehenden Ansprüche,
bei der eine Mehrzahl von Kühlkörpern (158) gitterartig in dem Kühlluftkanal (152) angeordnet ist.

6. Turbinenschaufel (120, 130) nach einem der vorhergehenden Ansprüche,
bei der der Kühlluftkanal (158) an eine Profilhinterkante (146) der Turbinenschaufel (120, 130) grenzt.

7. Stator (143) oder Rotor (103) für eine Turbine (100) mit
einer Turbinenschaufel (120, 130) nach einem der vorhergehenden Ansprüche.

8. Turbine (100) mit einem Stator (143) und/oder Rotor (103) nach Anspruch 7.

9. Turbine (100) nach Anspruch 8,
die als Gasturbine (100) ausgelegt ist.

10. Kraftwerksanlage mit einer Turbine (100) nach Anspruch 8 oder 9.
